## Europäisches Patentamt

(19) **European Patent Office**

**Office européen des brevets**

(11) Veröffentlichungsnummer: **0 166 087**

**B1**

(12) # EUROPÄISCHE PATENTSCHRIFT

(45) Veröffentlichungstag der Patentschrift:
**12.10.88**

(21) Anmeldenummer: **85103632.7**

(22) Anmeldetag: **27.03.85**

(51) Int. Cl.⁴: **G 07 C 9/00,** G 01 S 17/74,
G 02 F 1/015

(54) Einrichtung zur kontaktlosen Informationsübertragung zwischen einem Identifikator und einem Identifikanden.

(30) Priorität: **03.05.84 CH 2150/84**

(43) Veröffentlichungstag der Anmeldung:
**02.01.86 Patentblatt 86/1**

(45) Bekanntmachung des Hinweises auf die Patenterteilung:
**12.10.88 Patentblatt 88/41**

(84) Benannte Vertragsstaaten:
**AT DE FR GB IT SE**

(56) Entgegenhaltungen:
**EP-A-0 025 816**
**DE-A-1 933 957**
**DE-A-2 031 085**
**DE-B-1 274 677**
**FR-A-2 290 673**
**GB-A-1 529 789**
**GB-A-1 567 750**
**US-A-3 158 746**
**US-A-3 584 220**

(73) Patentinhaber: **LGZ LANDIS & GYR ZUG AG, CH-6301 Zug (CH)**

(72) Erfinder: **Popovic, Radivoje, Fridbach 1, CH- 6300 Zug (CH)**

(74) Vertreter: **Müller, Hans- Jürgen, Dipl.- Ing., Müller, Schupfner & Gauger Lucile- Grahn- Strasse 38 . Postfach 80 13 69, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung bezieht sich auf eine Einrichtung zur kontaktlosen Informationsübertragung zwischen einem Identifikator und einem Identifikanden nach dem Oberbegriff des Patentanspruchs 1.

Im folgenden sollen unter dem Begriff "Identifikand" nicht nur eine eigentliche Identifikationskarte, sondern auch kartenförmige, gegebenenfalls entwertbare Kredit-, Zutrittsberechtigungs-, Datenspeicherungs- oder für ähnliche Zwecke verwendbare Hilfsmittel verstanden werden.

In der DE-OS-2 031 085 ist eine Einrichtung nach dem Oberbegriff des Patentanspruchs 1 beschrieben, bei welcher gegebenenfalls die Stromversorgung einer im flächenförmigen Körper eingeschlossenen elektronischen Schaltung auf optischen Weg mit Hilfe einer Lichtquelle im Identifikator und einer Solarzelle im Identifikanden erfolgt. Außerdem sind lichtmodulierende Halbleiterelemente, die Infrarotlicht zwischen den Grenzflächen einer p-dotierten Grenzschicht mehrfach reflektieren, als solche aus US-A-3 158 746 bekannt.

Der Erfindung liegt die Aufgabe zugrunde, einen flachen Identifikator zu ermöglichen.

Diese Aufgabe wird durch die Merkmale des Kennzeichens des Patentanspruchs 1 gelöst.

Ausführungsbeispiele der Erfindung werden anhand einer Zeichnung näher erläutert. Es bedeuten:

Fig. 1 ein Blockschema einer Einrichtung zur optischen Informationsübertragung zwischen einem Identifikator und einem Identifikanden und

Fig. 2 bis 4 ein Halbleiterelement eines elektronisch-optischen Modulators in einem Identifikanden.

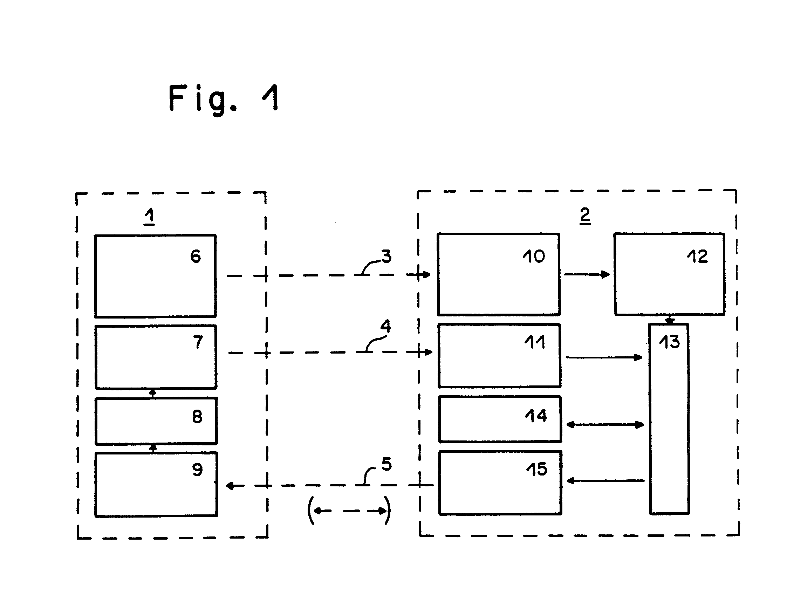

Das Blockschema nach der Fig. 1 einer Einrichtung zur optischen Informationsübertragung zwischen einem Identifikator 1 und einem Identifikanden 2 zeigt einerseits die verschiedenen Schaltteile im Identifikator 1 und im Identifikanden 2 und die optischen kontaktlosen Übertragungswege 3, 4 und 5 zwischen den beiden. Die Übertragungswege 3 und 4 sind einseitig vom Identifikator 1 zum Identifikanden 2 gerichtet, während der Übertragungsweg 5 entweder nur einseitig vom Identifikanden 2 zum Identifikator 1 oder beidseitig zwischen den beiden gerichtet sein kann. Die zweite Möglichkeit ist in der Klammer angedeutet.

Der Identifikator 1 besteht aus einer ersten Lichtquelle 6, die Infrarotlicht über den Übertragungsweg 3 aussenden kann. Eine weitere, der ersten ähnliche, jedoch modulierbare Lichtquelle 7 im Identifikator 1, die von einem Mikroprozessor 8 gesteuert wird, ist dem Übertragungsweg 4 zugeordnet. Über den Übertragungsweg 5 wird eine lichtempfindliche Zelle 9 im Identifikator 1 angesteuert, welche ein Signal zur Auswertung zum Mikroprozessor 8 weiterleitet. Im übrigen ist der Identifikator 1 in bekannter Weise zur Abfrage des Identifikanden 2 ausgebildet, d. h. z. B. mit einem Schlitz zur Einführung des Identifikanden 2 und gegebenenfalls mit Transport-, Einzugs- und Entwertungsmitteln versehen.

Die erste Lichtquelle 6 dient der Speisung des Identifikanden 2 und ist für die Ausstrahlung eines Dauersignals oder eines Wechselsignals ausgerüstet. Die zweite Lichtquelle 7 erzeugt durch den Mikroprozessor 8 kodierte Lichtimpulse für den Übertragungsweg 4. Die verschiedenen Bauteile im Identifikator 1 werden durch ein eingebautes, nichtgezeichnetes Netzteil mit der notwendigen Versorgungsspannung gespeist.

Der Identifikand 2 besteht vorteilhaft aus einer mehrschichtigen Kunststoffkarte, in welcher eine elektronische Schaltung, auf einem einzigen Chip integriert, in an sich bekannter Weise eingebettet ist.

Die elektronische Schaltung im Identifikanden 2 besteht aus einer ersten Empfangsschaltung 10, einer zweiten Empfangsschaltung 11, einer elektrischen Energieumwandlungsschaltung 12, einem Mikroprozessor 13, einer Speicherschaltung 14 und einer oder mehreren Senderschaltungen 15.

Die erste Empfangsschaltung 10 enthält eine lichtempfindliche Zelle, beispielsweise eine Solarzelle, Photodiode oder ähnliches. Diese soll bei Speisung mit einem kontinuierlichen Lichtstrahl über den Übertragungsweg 3 eine Ausgangs-Gleichspannung von ungefähr einem Volt in einem Bereich von 10 bis 100 Mikrowatt liefern können. Bei Speisung mit Wechsellicht mit einer Frequenz im Bereich von über hundert kHz soll die lichtempfindliche Zelle eine Ausgangs-Wechselspannung von etwa einem Volt erzeugen, welche mittels eines Kondensators geeigneter Grösse gesiebt wird. Eine genügend grosse Spannung zum Betrieb der weiteren elektronischen Bauteile wird vorzugsweise mittels einer Zerhacker- und gegebenenfalls einer Spannungsverdopplerschaltung, gefolgt von einem Gleichrichter, in der Energieumwandlungsschaltung 12 erreicht. Solche Schaltungen sind bekannt und brauchen nicht näher beschrieben zu werden. Sie dienen in erster Linie zum Betrieb des Mikroprozessors 13, ferner der Speicherschaltung 14 und der Senderschaltung 15.

Die Ausgangsspannung der ersten Empfangsschaltung 10 kann ferner in der Energieumwandlungsschaltung 12 mittels ac/dc oder dc/dc-Wandlern, Stabilisatoren oder ähnlichen Schaltungen in eine für die einzelnen zu speisenden Schaltteile des Identifikanden 2 angemessene Spannung umgeformt werden.

Die zweite Empfangsschaltung 11 empfängt über den Übertragungsweg 4 die im Identifikator 1 erzeugten kodierten Lichtsignale und wandelt diese mittels einer lichtempfindlichen Zelle in Spannungsimpulse zur Weiterverarbeitung im Mikroprozessor 13 um. Dabei soll das Signal/Rauschverhältnis der Ausgangsimpulse besser als 10 und die Ansprechzeit der dazu benötigten Schaltung besser als 10 ms sein.

Im Mikroprozessor 13 werden die Ausgangssignale der zweiten Empfangsschaltung 11 umgewandelt, gegebenenfals mit in der Speicherschaltung 14 gespeicherten Informationen verglichen und Ausgangssignale für die Ansteuerung der Senderschaltung 15 erzeugt. Diese können gewünschtenfalls auch aus den gespeicherten Informationen bestehen.

Die Senderschaltung 15 enthält mindestens einen steuerbaren elektronisch-optischen Modulator, welcher in den Figuren 2 bis 4 dargestellt und anschliessend näher beschrieben wird. Sie empfängt einen im Identifikator 1 erzeugten kontinuierlichen Lichtstrahl, der mittels des steuerbaren elektronisch-optischen Modulators mit der im Mikroprozessor 13 des Identifikanden 2 von diesem zum Identifikator 1 zu übermittelnden Information moduliert und zum Identifikator 1 zu dessen lichtempfindlichen Zelle 9 zurückgesendet wird. Die Modulation kann durch Lichtschwächung oder Lichtstreuung bewirkt werden. Das zurückgesendete Signal hat ein Signal/Rauschverhältnis über 3 und eine Ansprechzeit von weniger als 10 ms.

Die Speicherschaltung 14 kann verschiedene Aufgaben erfüllen. Für kartenförmige, Identifikations- und/oder entwertbare Werteinheiten darstellende Identifikanden 2 genügen Speicher mit einer minimalen Speicherzellenzahl von über 100.

Wenn der Identifikand 2 dagegen hauptsächlich als Informationsspeicher dienen soll, sind entsprechend mehr Speicherzellen vorzusehen. Die Speicherschaltung 14 besteht in beiden Fällen aus einem löschbaren PROM, beispielsweise aus elektrisch umprogrammierbaren PROM (EEPROM). Wenn jeder Identifikand 2 in der letzten Phase der Herstellung individualisiert werden soll, ist ebenfalls eine höhere Speicherzellenzahl erforderlich.

Der Mikroprozessor 13 enthält logische Schaltungen, die im einfachsten Fall zumindest alle Funktionen des Chips synchronisieren. Die Zahl der logischen Funktionen hängt im wesentlichen von der Zahl der in der Speicherschaltung 14 anzusteuernden Speicherzellen ab.

Die Anzahl der Senderschaltungen 15 des Identifikanden 2 richtet sich danach, ob eine serielle Übertragung oder eine parallele Übertragung auf dem Übertragungsweg 5 vorgesehen ist. Im ersten Fall kann man sich mit einer einzigen Senderschaltung 15 begnügen. Im zweiten Fall sind eine oder mehrere, der Zahl der parallelen Informationen entsprechende Lichtquellen im Identifikator 1 und mehrere Senderschaltungen 15 im Identifikanden 2 zu benützen.

Die Senderschaltung 15 nach der Fig. 2 besteht aus einem Infrarotlicht modulierenden Halbleiterelement in MOS-Technologie. Im Identifikator 1 ist dementsprechend eine kontinuierliche Infrarot-Lichtquelle vorgesehen, die einen Infrarot-Lichtstrahl aussendet, der durch die Senderschaltung 15 im Identifikanden 2 intensitätsmoduliert wird.

Die Senderschaltung 15 nach Fig. 2 ist vierschichtig aufgebaut. Auf einem hochdotierten P+-Substrat 16 ist eine P-Schicht 17 aufgebracht, die von einer SiO$_2$-Schicht 18 überdeckt und mit einem Gate 19 versehen ist. Das P+-Substrat 16 wird mit Masse verbunden, während dem Gate 19 eine Steuerspannung VG vom Ausgang des Mikroprozessors 13 des Identifikanden 2 zugeführt wird.

Die Senderschaltung 15 des Identifikanden 2 nach der Fig. 2 wirkt auf folgende Weise:

Durch eine im Identifikanden 2 in dessen für Infrarotlicht nicht durchlässigen Oberflächenschicht vorgesehene erste Blende wird ein kontinuierlicher Infrarot-Lichtstrahl 20 vom Identifikator 1 empfangen. Der Infrarot-Lichtstrahl 20 kann ein von der Lichtquelle 6 des Identifikators 1 erzeugter kontinuierlicher und für die Speisung des Identifikanden bestimmter Lichtstrahl oder ein kontinuierlicher, von einer weiteren nichtgezeichneten Lichtquelle im Identifikator 1 erzeugter Lichtstrahl sein. Dieser wird nach seinem Eintritt in die für Infrarotlicht weitgehend transparente SiO$_2$-Schicht 18 der Senderschaltung 15 an dessen P+-Substrat 16 und der Schicht des Gate 19 mehrfach gebrochen und verlässt die Senderschaltung 15 durch eine nichtgezeichnete zweite Blende in der für Infrarotlicht nicht durchlässigen Oberflächenschicht des Identifikanden 2 als Infrarot-Lichtstrahl 20a. Dieser wird auf dem Übertragungsweg 5 zur lichtempfindlichen Zelle 9 des Identifikators 1 übertragen und dort detektiert.

Wenn eine genügend grosse positive pulsartige Spannung VG an das Gate 19 der Senderschaltung 15 des Identifikanden 2 angelegt wird, erfährt der Lichtstrahl bei seinen mehrfachen Reflexionen in der Senderschaltung 15 infolge der wegfallenden Absorbtion durch Ladungs-Träger eine verminderte Abschwächung. Die kodierten Abschwächungen der Lichtintensität stellen die vom Identifikanden 2 zum Identifikator 1 zu übertragende Information dar, welche mittels der lichtempfindlichen Zelle 9 des Identifikators 1 zu dessen Mikroprozessor 8 übertragen und dort verarbeitet wird und je nach dem Inhalt der Information eine Schalthandlung auslöst.

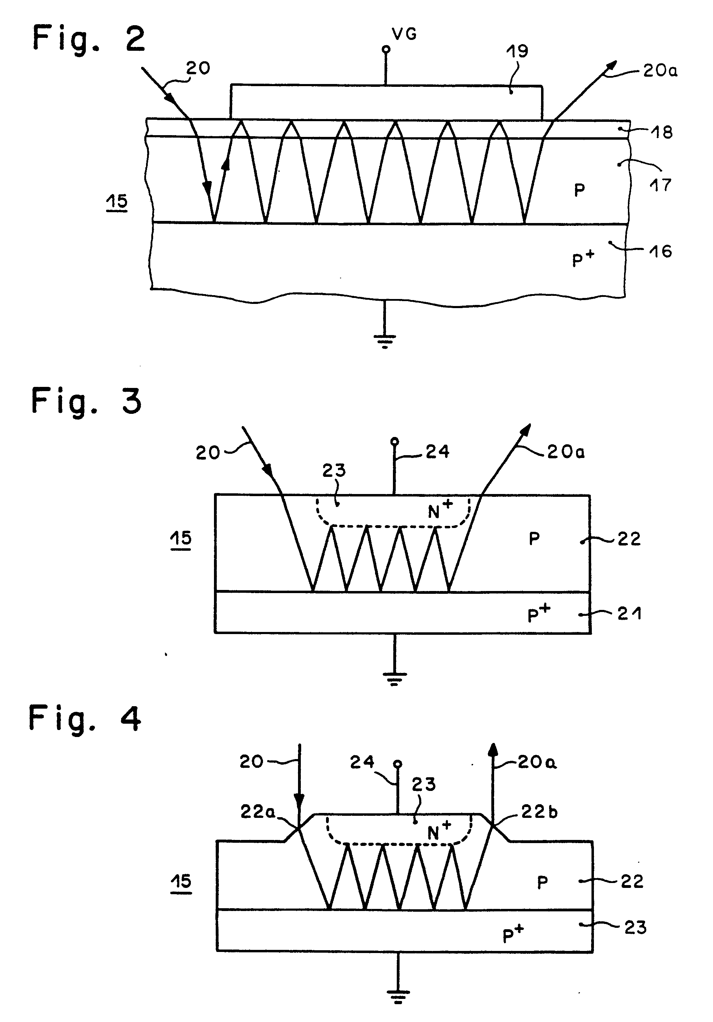

Anstelle einer MOS-Struktur, wie in der Fig. 2, kann auch eine ähnliche PN-Übergangsstruktur gemäss Fig. 3 im Halbleiterelement der Senderschaltung 15 verwendet werden.

Bei dieser Halbleiterform ist auf einem stärker mit Fremdatomen dotierten P+-Substrat 21 eine P-Schicht 22 angeordnet, in die eine stärker mit Fremdatomen (N+) dotierte Steuerelektrode 23 wannenförmig eingelassen und auf dieser ein Anschlussdraht 24 aufgelötet ist. Das P+-Substrat ist mit Masse verbunden.

Bei dieser Ausführungsform wird ein eintretender Infrarot-Lichtstrahl 20 mehrfach an der Grenzschicht des P+-Substrats 21 und der Steuerelektrode 23 gebrochen und verlässt das Halbleiterelement der Senderschaltung 15 als Infrarot-Lichtstrahl 20a. Wenn durch den Mikroprozessor 13 des Identifikanden 2 eine positive Steuerspannung an die Steuerelektrode 23 angelegt wird, erfährt der im Halbleiterelement mehrfach gebrochene Lichtstrahl eine Streuung, wodurch der austretende Infrarot-Lichtstrahl 20a weniger geschwächt wird. Diese wechselnde Schwächung ist signifikant für die vom Identifikanden 2 zum Identifikator 1 zu übertragende Information.

Die Halbleiterschaltung der Senderschaltung 15 der Fig. 4 ist im Grunde gleich aufgebaut wie diejenige der Fig. 3. Dagegen ist die Oberfläche der P-Schicht 22 an den Stellen 22a und 22b derart gegenüber der Senkrechten symmetrisch abgeschrägt, dass der eintretende Infrarot-Lichtstrahl 20 und der austretende Infrarot-Lichtstrahl 20a senkrecht zur übrigen Oberfläche der P-Schicht ein- oder austreten können. Die Senderschaltung 15 nach Fig. 4 wirkt gleich wie diejenige der Fig. 3.

Die Modulatoren gemäss den Fig. 2 bis 4 können auch mit komplementärer Dotierung ausgeführt werden.

**Patentansprüche**

1. Einrichtung zur kontaktlosen Informationsübertragung zwischen einem Identifikator (1) und einem Identifikanden (2), wobei der Identifikand (2) eine in einem flächenförmigen Körper eingeschlossene elektronische Schaltung enthält, die Stromversorgung des Identifikanden (2) mit Hilfe einer in einer Empfangsschaltung (10) befindlichen ersten lichtempfindlichen Zelle erfolgt und die Übertragung von Informationen vom Identifikanden (2) zum Identifikator (1) mit Hilfe eines vom Identifikator (1) ausgesandten und im Identifikanden (2) vor der Rückstrahlung zu einer im Identifikator (1) befindlichen zweiten lichtempfindlichen Zelle (9) modulierten Lichtstrahls (20, 20a) erfolgt und im Identifikanden (2) mindestens eine Licht modulierende Senderschaltung (15) vorgesehen ist,

dadurch gekennzeichnet,

daß als Licht Infrarotlicht verwendet wird, im Identifikanden (2) alle elektronischen Schaltungen sowie die zugeordneten optischen Bauteile in einem einzigen, flächenförmigen, in den Identifikanden einschließbaren Chip integriert sind und dabei die dem Chip zugehörigen Senderschaltungen (15), die von einem dem Chip zugehörigen Mikroprozessor (13) steuerbare elektronisch-optische Modulatoren enthalten, als Halbleiterelemente ausgebildet sind und das Infrarotlicht zwischen den beiden Grenzflächen einer P-Schicht mehrfach reflektieren.

2. Einrichtung nach Anspruch 1, dadurch gekennzeichnet, dass in der Senderschaltung (15) ein intensitätsmodulierendes Halbleiterelement vorgesehen ist.

3. Einrichtung nach Anspruch 2, dadurch gekennzeichnet, dass das Halbleiterelement in der Senderschaltung (15) in MOS-Technologie ausgeführt ist.

4. Einrichtung nach Anspruch 1, dadurch gekennzeichnet, dass in der Senderschaltung (15) ein lichtstreuendes Halbleiterelement angeordnet ist.

5. Einrichtung nach Anspruch 4, dadurch gekennzeichnet, dass die Senderschaltung (15) ein Halbleiterelement mit einem PN-Übergang und einer stärker mit Fremdatomen (N+) dotierten Steuerelektrode (23) enthält.

6. Einrichtung nach Anspruch 1, dadurch gekennzeichnet, dass der Mikroprozessor (13) für eine serielle, parallele oder gemischte Übertragung ausgebildet ist und dementsprechend eine einzige oder mehrere Senderschaltungen (15) im Identifikanden (2) und lichtempfindliche Zellen (9) im Identifikator (1) vorgesehen sind.

7. Einrichtung nach Anspruch 1, dadurch gekennzeichnet, dass die Stromversorgung des Identifikanden (2) mit Hilfe einer einen kontinuierlichen Lichtstrahl erzeugenden Lichtquelle (6) im Identifikator (1) über einen Übertragungsweg (3) zu einer ersten Empfangsschaltung (10) erfolgt, an die eine Energieumwandlungsschaltung (12) angeschlossen ist.

8. Einrichtung nach Anspruch 1, dadurch gekennzeichnet, dass die Stromversorgung des Identifikanden (2) mit Hilfe einer Wechsellicht erzeugenden Lichtquelle (6) im Identifikator (1) zu einer ersten Empfangsschaltung (10) über einen Übertragungsweg (3) erfolgt, an die eine Energieumwandlungsschaltung (12) mit einer Spannungsverdopplerschaltung angeschlossen ist.

9. Einrichtung nach Anspruch 1, dadurch gekennzeichnet, dass der Identifikand (2) eine Speicherschaltung (14) enthält.

**Claims**

1. Apparatus for the contact-less transmission of information between an identificator (1) and an identificand (2), wherein the identificand (2) includes an electronic circuit which is enclosed in a sheet-like body, the power supply for the identificand (2) is provided by means of a first photosensitive cell which is disposed in a receiving circuit (10) and the transmission of information from the identificand (2) to the identificator (1) is effected by means of a light beam (20, 20a) which is emitted by the identificator (1) and which is modulated in the identificand (2) before being reflected to a second photosensitive cell (9) which is disposed in the identificator (1), and at least one light-modulating transmitter circuit (15) is provided in the identificand (2), characterised in that the light used is infra-red light, in the identificand (2) all electronic circuits and the associated optical components are integrated into a single sheet-like chip which can be enclosed in the identificand and therein the transmitter circuits (15) which belong to the chip and which include electronic-optical modulators controllable by a microprocessor (13) belonging to the chip are in the form of semiconductor elements and reflect the infra-red light a plurality of times between the two interfaces of a P-layer.

2. Apparatus according to claim 1 characterised in that an intensity-modulating semiconductor element is provided in the transmitter circuit (15).

3. Apparatus according to claim 2 characterised in that the semiconductor element in the transmitter circuit (15) is of MOS-type.

4. Apparatus according to claim 1 characterised in that a light-scattering semiconductor element is arranged in the transmitter circuit (15).

5. Apparatus according to claim 4 characterised in that the transmitter circuit (15) includes a semiconductor element with a PN-junction and a control electrode (23) which is more heavily doped with impurity atoms (N+).

6. Apparatus according to claim 1 characterised in that the microprocessor (13) is designed for serial, parallel or hybrid transmission and accordingly a single or a plurality of transmitter circuits (15) are provided in the identificand (2) and photosensitive cells (9) in the identificator (1).

7. Apparatus according to claim 1 characterised in that the power supply of the identificand (2) is provided by means of a light source (6) producing a continuous light beam in the identificator (1) by way of a transmission path (3) to a first receiving circuit (10) to which an energy conversion circuit (12) is connected.

8. Apparatus according to claim 1 characterised in that the power supply of the identificand (2) is provided by means of a light source (6) producing alternating light in the identificator (1) by way of a transmission path (3) to a first receiving circuit (10) to which there is connected an energy conversion circuit (12) with a voltage doubler circuit.

9. Apparatus according to claim 1 characterised in that the identificand (2) includes a storage circuit (14).

**Revendications**

1. Dispositif de transmission d'informations sans contact entre un identificateur (1) et un support d'identification (2), le support d'identification (2) contenant un circuit électronique inclus dans un corps de forme plane, l'alimentation en courant du support d'identification (2) étant effectuée à l'aide d'une première cellule photosensible située dans un circuit récepteur (10) et la transmission d'informations du support d'identification (2) à l'identificateur (1) étant effectuée à l'aide d'un rayon lumineux (20, 20a), émis par l'identificateur (2) et modulé dans le support d'identification (2) avant le rayonnement en retour vers une seconde cellule photosensible (9) située dans l'identificateur (1), tandis qu'il est prévu dans le support d'identification (2) au moins un circuit émetteur (15) modulant la lumière,

caractérisé en ce que,

comme lumière, on utilise une lumière infrarouge, dans le support d'identification (2) tous les circuits électroniques ainsi que les composants optiques associés sont intégrés dans une seule puce de forme plate pouvant être incluse dans le support d'identification et, à cet effet, les circuits émetteurs (15) associés à la puce, qui contiennent des modulateurs optoélectroniques pouvant être commandés par un microprocesseur (13) associé à la puce, sont agencés comme des éléments semi-conducteurs et réfléchissent la lumière infrarouge entre les deux surfaces de délimitation d'une couche P.

2. Dispositif selon la revendication 1, caractérisé en ce qu'il est prévu dans le circuit émetteur (15) un élément semi-conducteur à modulation d'intensité.

3. Dispositif selon la revendication 2, caractérisé en ce que l'élément semi-conducteur prévu dans le circuit émetteur (15) est réalisé conformément à la technologie MOS.

4. Dispositif selon la revendication 1, caractérisé en ce qu'un élément semi-conducteur dispersant la lumière est disposé dans le circuit émetteur (15).

5. Dispositif selon la revendication 4, caractérisé en ce que le circuit émetteur (15) contient un élément semi-conducteur pourvu d'une transition PN et d'une électrode de commande (23) fortement dopée en atomes étrangers (N+).

6. Dispositif selon la revendication 1, caractérisé en ce que le microprocesseur (13) est agencé pour une transmission en série, parallèle ou mixte, et, en correspondance, il est prévu un seul ou plusieurs circuits émetteurs (15) dans le support d'identification (2) et des cellules photosensibles (9) dans l'identificateur (1).

7. Dispositif selon la revendication 1, caractérisé en ce que l'alimentation en courant du support d'identification (2) est effectuée au moyen d'une source lumineuse (6) de l'identificateur (1), produisant un rayon lumineux continu transmis par l'intermédiaire d'une voie de transmission (3) à un premier circuit récepteur (10), avec lequel est relié un circuit de conversion d'énergie (12).

8. Dispositif selon la revendication 1, caractérisé en ce que l'alimentation en courant du support d'identification (2) est effectuée au moyen d'une source lumineuse (6) de l'identificateur (1), produisant une lumière alternative qui est transmise à un premier circuit récepteur (10) par l'intermédiaire d'une voie de transmission (3), à laquelle est relié un circuit de conversion d'énergie (12) associé à un circuit doubleur de tension.

9. Dispositif selon la revendication 1, caractérisé en ce que le support d'identification (2) contient un circuit de mémoire (14).

# Fig. 1

Fig. 2

Fig. 3

Fig. 4